# EUROPÄISCHE PATENTSCHRIFT

(11) **EP 3 436 294 B1**
(45) Veröffentlichungstag und Bekanntmachung des Hinweises auf die Patenterteilung: **06.04.2022**
(21) Anmeldenummer: 17703323.0
(22) Anmeldetag: 06.02.2017
(51) Int. Cl.: B60G 17/052, F15B 21/04, F15B 21/08, F15B 21/00, F15B 21/048

(54) **DRUCKLUFTVERSORGUNGSANLAGE**
COMPRESSED AIR SUPPLY SYSTEM
DISPOSITIF D'ALIMENTATION EN AIR COMPRIMÉ

(30) Priorität: 30.03.2016 DE 102016003661
(43) Veröffentlichungstag der Anmeldung: 06.02.2019
(73) Patentinhaber: ZF CV Systems Europe BV, 1170 Brussels (BE)
(72) Erfinder: MEIER, Jörg, 31840 Hessisch Oldendorf (DE); STABENOW, Uwe, 30880 Laatzen (DE); STÜNKEL, Christoph, 31515 Wunstorf (DE)
(74) Vertreter: Rabe, Dirk-Heinrich
(86) Internationale Anmeldenummer: PCT/EP2017/000159
(87) Internationale Veröffentlichungsnummer: WO 2017/167428

(56) Entgegenhaltungen:
- EP-A1- 2 123 343
- EP-B2- 1 165 333
- WO-A1-2016/026577
- DE-A1-102012 024 400

## Beschreibung

Die Erfindung betrifft eine Druckluftversorgungsanlage zum Betreiben einer Pneumatikanlage, insbesondere einer Luftfederanlage eines Fahrzeugs. Die Erfindung betrifft weiter ein pneumatisches System mit der Druckluftversorgungsanlage, ein Verfahren zum Betreiben einer Druckluftversorgungsanlage und/oder einer Pneumatikanlage, insbesondere einer Luftfederanlage eines Fahrzeugs, und eine Einrichtung zum Steuern und/oder Regeln einer Druckluftversorgungsanlage und/oder einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

DE 10 2011 109 500 A1 beschreibt eine Druckluftversorgungseinheit zum Betreiben einer Pneumatikanlage, die eine Druckluftzuführung, einen Druckluftanschluss zur Pneumatikanlage und einen Entlüftungsanschluss zur Umgebung aufweist. Weiterhin werden eine erste pneumatische Verbindung zwischen der Druckluftzuführung und dem Druckluftanschluss und eine zweite pneumatische Verbindung zwischen dem Druckluftanschluss und dem Entlüftungsanschluss beschrieben. Dabei ist außer einem Entlüftungsventil in der zweiten pneumatischen Verbindung zusätzlich vorgesehen, dass ein Trennventil der ersten pneumatischen Verbindung mit einem pneumatisch entsperrbaren Rückschlagventil gebildet ist und wobei sowohl das Entlüftungsventil als auch das entsperrbare Rückschlagventil gemeinsam über ein Steuerventil gesteuert werden.

EP 1 165 333 B2 beschreibt ein Luftfedersystem für ein Kraftfahrzeug mit einer Kompressoreinheit. Das Luftfedersystem weist dabei zusätzlich zu einer absperrbaren oder freischaltbaren Haupt-Entlüftungsleitung eine Hochdruck-Entlüftungsleitung auf, die mit einem Entlüftungsventil separat absperrbar ist. Die Hochdruck-Entlüftungsleitung soll zwingend nach Ablauf einer geringen Zeitspanne, nachdem bereits die absoluten Druck-Spitzenwerte abgebaut sind, über ein Ventil geschlossen werden, so dass die weitere Rest-Entlüftung über die Haupt-Entlüftungsleitung erfolgt. Um in der geringen Zeitspanne lediglich die absoluten Druck-Spitzenwerte abzubauen, weist die Hochdruck-Entlüftungsleitung einen erheblich geringeren freien Durchströmungsquerschnitt auf und ist insofern als eine quasi-gedrosselte Hochdruck-Entlüftungsleitung lediglich für die anfängliche Druckreduktion vorgesehen, damit keine störende Geräuschentwicklung zu befürchten ist.

Die Aufgabe der vorliegenden Erfindung ist es eine verbesserte Lösung für eine Druckluftversorgungsanlage bereitzustellen, die einen verbesserten, insbesondere schnelleren Entlüftungsvorgang gewährleistet. Insbesondere soll dies für eine Fahrzeugabsenkung gewährleistet sein. Vorteilhaft soll gleichwohl eine Geräuschentwicklung bei einer Entlüftung gering gehalten werden. Insbesondere soll gleichwohl eine vorteilhafte Regeneration eines Lufttrockners erreicht werden.

Diese Aufgabe wird erfindungsgemäß mit der Druckluftversorgungsanlage des Anspruchs 1 gelöst. Erfindungsgemäß wird damit in einem ersten Aspekt der Erfindung, eine Druckluftversorgungsanlage zum Betreiben einer Pneumatikanlage vorgeschlagen, insbesondere einer Luftfederanlage eines Fahrzeugs, wobei die Druckluftversorgungsanlage aufweist:
- eine Druckluftzuführung,
- einen Druckluftanschluss zur Pneumatikanlage,
- mindestens einen Entlüftungsanschluss zur Umgebung,
- eine Pneumatikhauptleitung zwischen der Druckluftzuführung und dem Druckluftanschluss, die einen Lufttrockner und eine Regenerationsdrossel, aufweist,
- eine erste Entlüftungsleitung zwischen der Pneumatikhauptleitung und einem Entlüftungsanschluss, die ein erstes, pneumatisches 4/2-Wege-Entlüftungsventil, das in einer ersten Stellung die erste Entlüftungsleitung geschlossen lässt und in der Pneumatikhauptleitung ein Rückschlagventil bildet, und eine Entlüftungsdrossel aufweist,
- eine zweite Entlüftungsleitung zwischen dem Druckluftanschluss und einem Entlüftungsanschluss, wobei die zweite Entlüftungsleitung ein zusätzliches zweites Entlüftungsventil aufweist, welches ein 2/2-Wege-Ventil ist und das in einer ersten Stellung als ein Rückschlagventil ausgebildet ist, und die zweite Entlüftungsleitung einen größeren minimalen Strömungsquerschnitt eines durchströmenden Druckluftstroms erlaubt als die erste Entlüftungsleitung,
wobei die Druckluftversorgungsanlage ausgebildet ist, mindestens einen Betriebsmodus bereitzustellen, in dem das zweite Entlüftungsventil über einen vorbestimmten, insbesondere über einen gesamten Zeitraum eines Entlüftungsvorgangs geöffnet ist.

Ein Vorteil des ersten Aspekts der Erfindung liegt somit darin, dass ein zusätzliches Ventil und eine entsprechende zusätzliche Leitung in die Druckluftversorgungsanlage eingebaut sind, um eine schnellere Entlüftung der Pneumatikanlage zu gewährleisten.

Die Entlüftung über das zusätzliche zweite Entlüftungsventil kann dabei beliebig lange erfolgen, bis beispielsweise in einem finalen Entlüftungszustand innerhalb der Pneumatikanlage nur noch der Umgebungsdruck herrscht. So kann in der erfindungsgemäßen Druckluftversorgungsanlage also sowohl ein Entlüftungsquerschnitt eingestellt werden, also eine Wahl getroffen werden, ob das zweite Entlüftungsventil genutzt werden soll, als auch eine Dauer für diesen Entlüftungsprozess vorgegeben werden.

Solch eine individuelle Einstellung der Druckluftversorgungsanlage kann beispielsweise interessant sein, falls man die Druckluft innerhalb eines Fahrzeugs unverzüglich regulieren will. Dies kann für ein sofortiges Absenken eines Fahrzeugs zum einfachen Einstieg oder für ein asymmetrisches Absenken eines Fahrzeugs zu Show-Zwecken relevant sein.

Weiterhin ist vorteilhaft, dass bekannte Druckluftversorgungsanlagen aus dem Stand der Technik einfach zu einer erfindungsgemäßen Druckluftversorgungsanlage umgebaut werden können. Dies erfordert lediglich ein Anbringen einer zweiten Entlüftungsleitung sowie eines zweiten Entlüftungsventils.

Als Betriebsmodus wird im Rahmen der Erfindung unter anderem eine Stellung der Ventile der Druckluftversorgungsanlage oder eine vordefinierte Abfolge von Stellungen der Ventile bezeichnet. Eine weitere wichtige Stellgröße der Druckluftversorgungsanlage für die Definition eines Betriebsmodus, kann eine verstellbare Drosselbreite der Entlüftungsdrossel sein.

Gemäß einem zweiten Aspekt, betrifft die Erfindung ein pneumatisches System mit der Druckluftversorgungsanlage nach dem ersten Aspekt der Erfindung. Das erfindungsgemäße pneumatische System weist weiterhin eine Pneumatikanlage auf, die in Form einer Luftfederanlage gebildet ist, die eine Galerie und wenigstens eine an der Galerie pneumatisch angeschlossene erste Zweigleitung mit einem Balg und/oder eine an der Galerie pneumatisch angeschlossene zweite Zweigleitung mit einem Druckluftreservoir, sowie einem dem Balg vorgeordneten ersten Wegeventil und/oder einem dem Druckluftreservoir vorgeordneten zweiten Wegeventil aufweist.

Ein dritter Aspekt der Erfindung betrifft ein Verfahren zum Betreiben einer Pneumatikanlage, insbesondere einer Luftfederanlage eines Fahrzeugs, mittels einer Druckluftversorgungsanlage nach dem ersten Aspekt der Erfindung. Das erfindungsgemäße Verfahren weist die folgenden Schritte auf:
- Befüllen der Pneumatikanlage mittels einer über eine Pneumatikhauptleitung geführte Druckluftströmung aus der Druckluftversorgungsanlage, insbesondere während eines selbstständigen Öffnens eines Rückschlagventils in der Pneumatikhauptleitung;
- Halten des Drucks in der Pneumatikanlage, wobei die Pneumatikhauptleitung gegen eine Druckluftströmung aus der Pneumatikanlage, insbesondere durch das Rückschlagventil, gesperrt wird, und
- Entlüften der Pneumatikanlage mittels der über die Pneumatikhauptleitung geführten Druckluftströmung aus der Pneumatikanlage über ein erstes, mit einer Entlüftungsdrossel verbundenes, Entlüftungsventil und/oder über ein zusätzliches zweites Entlüftungsventil, insbesondere während eines Entsperrens des Rückschlagventils in der Pneumatikhauptleitung, wobei in mindestens einem Betriebsmodus der Druckluftversorgungsanlage das zweite Entlüftungsventil über eine vorbestimmte Zeitdauer eines Entlüftungsvorgang geöffnet ist. Das Verfahren gemäß dem dritten Aspekt der Erfindung hat die gleichen Vorteile wie die Druckluftversorgungsanlage gemäß dem ersten Aspekt der Erfindung, da die Druckluftversorgungseinheit nach dem ersten Aspekt zu dem Verfahren gemäß dem dritten Aspekt führt.

Gemäß einem vierten Aspekt, betrifft die Erfindung eine Einrichtung zum Steuern und/oder Regeln einer Druckluftversorgungsanlage und/oder einer Pneumatikanlage entsprechend einem Verfahren gemäß dem dritten Aspekt der Erfindung.

Die Einrichtung zum Steuern und/oder Regeln einer Druckluftversorgungsanlage und/oder einer Pneumatikanlage gemäß dem vierten Aspekt der Erfindung hat die gleiche Vorteile wie die Druckluftversorgungsanlage gemäß dem ersten Aspekt der Erfindung, da die Druckluftversorgungseinheit zu dem Programm gemäß dem vierten Aspekt führt.

Dabei kann die Einrichtung zum Steuern und/oder Regeln in einem Computer ausgeführt werden, der sich in dem Fahrzeug befindet, in dem das entsprechende Verfahren zum Betreiben einer Pneumatikanlage realisiert wird. Alternativ kann sich der Computer in einem externen Gerät befinden, dass beispielsweise über eine Funkverbindung eine Druckluftversorgungsanlage ansteuert, die das Verfahren zum Betreiben einer Pneumatikanlage ausführt. Hierbei ist das Programm derart ausgebildet, dass der das Programm ausführende Computer eine Stellung der jeweiligen Ventile der Druckluftversorgungseinheit und/oder der Pneumatikanlage steuert.

Nachfolgend werden bevorzugte Weiterbildungen der erfindungsgemäßen Druckluftversorgungsanlage gemäß dem ersten Aspekt der Erfindung beschrieben.

Insbesondere ist die erste Entlüftungsleitung und die zweite Entlüftungsleitung mit demselben Entlüftungsanschluss verbunden.

In einer Weiterbildung weist die Pneumatikhauptleitung weiterhin ein Rückschlagventil auf.

Weiterhin erlaubt in einer Weiterbildung der Druckluftversorgungsanlage die zweite Entlüftungsleitung einen größeren minimalen Strömungsquerschnitt eines durchströmenden Druckluftstroms als die erste Entlüftungsleitung. Insbesondere ist es von Vorteil, dass die Entlüftungsdrossel eine größere Nennweite als die Regenerationsdrossel hat.

Der minimale Strömungsquerschnitt entspricht dem Strömungsquerschnitt an derjenigen Komponente einer jeweiligen Entlüftungsleitung mit der kleinsten Nennweite. In dieser bevorzugten Weiterbildung kann die zweite Entlüftungsleitung für eine schnellere Entlüftung genutzt werden, als der zweite Entlüftungskanal. In einer Variante dieser Weiterbildung ist der minimale Strömungsquerschnitt der zweiten Entlüftungsleitung mindestens 1,5 mal so groß, bevorzugt mindestens doppelt so groß, bevorzugt mindestens dreimal so groß wie der minimale Strömungsquerschnitt der ersten Entlüftungsleitung. In einer Variante dieser Weiterbildung sind die minimalen Strömungsquerschnitte der ersten Entlüftungsleitung und der zweiten Entlüftungsleitung steuerbar. So kann zusätzlich zum Ansteuern, welche Entlüftungsleitung verwendet werden soll, auch ein Strömungsquerschnitt bestimmt werden, wodurch effektiv eine Entlüftungsgeschwindigkeit der Pneumatikanlage feinstufig reguliert werden kann. Dies wird beispielsweise in einer Variante über eine erste steuerbare Entlüftungsdrossel in der ersten Entlüftungsleitung und eine zweite steuerbare Entlüftungsdrossel in der zweiten Entlüftungsleitung realisiert. Die erste steuerbare Entlüftungsdrossel und die erste Entlüftungsdrossel können dabei identisch sein.

In einer Weiterbildung gemäß dem ersten Aspekt der Erfindung sind die erste Entlüftungsleitung und die zweite Entlüftungsleitung mit demselben Entlüftungsanschluss verbunden. Somit ist die Druckversorgungsanlage gemäß dieser Weiterbildung besonders kompakt gebaut, da nicht zwei Entlüftungsanschlüsse für die Entlüftung von Druckluft genutzt werden müssen. In einer bevorzugten Variante dieser Weiterbildung ist ein Druckluftzuführungsanschluss identisch mit dem Entlüftungsanschluss, so dass die Druckluftzuführung mit dem Entlüftungsanschluss verbunden ist. Dadurch kann Material für Komponenten der Druckluftversorgungsanlage eingespart werden. Weiterhin kann dadurch zusätzlich Platz innerhalb eines mit der Druckluftversorgungsanlage ausgestatten Fahrzeugs eingespart werden.

In einer besonders bevorzugten Weiterbildung ist der vorbestimmte Zeitraum, in dem das zweite Entlüftungsventil geöffnet ist, in mindestens einem Betriebsmodus der gesamte Zeitraum des Entlüftungsvorgangs. Hierdurch kann eine besonders schnelle Entlüftung in diesem Betriebsmodus möglich sein.

Die Druckluftversorgungsanlage ist in einer bevorzugten Weiterbildung ausgebildet, einen ersten Betriebsmodus bereitzustellen, in dem nur das erste Entlüftungsventil geöffnet ist, so dass die Pneumatikanlage ausschließlich über die Entlüftungsdrossel entlüftet werden kann. Dadurch kann mit der erfindungsgemäßen Druckluftversorgungsanlage in diesem ersten Betriebsmodus auf die aus dem Stand der Technik bekannte Art und Weise eine Entlüftung der Druckluftversorgungsanlage durchgeführt werden.

In einer weiteren bevorzugten Weiterbildung ist die Druckluftversorgungsanlage ausgebildet, einen zweiten Betriebsmodus bereitzustellen, in dem das erste Entlüftungsventil und das zweite Entlüftungsventil zumindest zeitweise gleichzeitig geöffnet sind, so dass die Pneumatikanlage über den vorbestimmten Zeitraum, insbesondere über den gesamten Zeitraum des Entlüftungsvorgangs über die erste Entlüftungsleitung und die zweite Entlüftungsleitung entlüftet werden kann. In einer Variante dieser Weiterbildung, hat die zweite Entlüftungsleitung einen mindestens doppelt so großen minimalen Strömungsquerschnitt eines durchströmenden Druckluftstroms wie die erste Entlüftungsleitung. Folglich ist in dem zweiten Betriebsmodus eine deutlich schnellere Entlüftung der Druckluftversorgungsanlage, als in dem ersten Betriebsmodus möglich.

Weiterhin hat die Druckluftversorgungsanlage in einer weiteren Weiterbildung, einen dritten Betriebsmodus, in dem nur das zweite Entlüftungsventil geöffnet ist, so dass die Pneumatikanlage ausschließlich über die zweite Entlüftungsleitung entlüftet werden kann.

In einer besonders bevorzugten Weiterbildung kann für die Durchführung eines Entlüftungsprozesses in der Druckluftversorgungsanlage zwischen den drei Betriebsmodi oder zwischen dem ersten und dem dritten Betriebsmodus, oder zwischen dem ersten und dem zweiten Betriebsmodus gewählt werden. Eine Wahl des Betriebsmodus erfolgt bevorzugt automatisiert, abhängig von einer jeweiligen Aktion eines Nutzers der Druckluftversorgungsanlage. Beispielsweise kann das Öffnen einer Tür zu einer Aktivierung des zweiten oder dritten Betriebsmodus führen, damit das Fahrzeug schnell für einen komfortablen Einstieg abgesenkt werden kann. Die Auswahl des jeweiligen Betriebsmodus, erfolgt in einer weiteren Variante dieser Weiterbildung über ein externes Gerät, mit dem eine Nutzeingabe, die einen Betriebsmodus impliziert, empfangen und weitergegeben werden kann.

In der Druckluftversorgungsanlage ist ein Rückschlagventil in der Pneumatikhauptleitung ein 4/2-Wege-Ventil, welches eine Entlüftung der ersten Entlüftungsleitung steuert. Dies ist vorteilhaft, da dadurch eine kompakte Kombination von Rückschlagventil aus der Pneumatikhauptleitung und erstem Entlüftungsventil aus der ersten Entlüftungsleitung möglich ist, wie später anhand von in den Figuren dargestellten Ausführungsformen der Druckversorgungsanlage genauer erläutert wird.

In einer Weiterbildung ist der zweite und/oder ein anderer Betriebsmodus so bereitgestellt, dass das erste Entlüftungsventil zu einem Zeitpunkt t1 geöffnet wird und dass das zweite Entlüftungsventil zu einem Zeitpunkt t2 geöffnet wird, und dass der Zeitpunkt t1 in der Zeit vor dem Zeitpunkt t2 liegt. Hierdurch kann ein Entlüftungsknall von dem ersten Entlüftungsventil entlüftet werden, so dass daraufhin auf eine schnellere Entlüftung ohne Entlüftungsknall mit dem zweiten Entlüftungsventil umgeschaltet werden kann.

In einer Weiterbildung weist die Druckluftversorgungsanlage weiterhin ein Druckluftreservoir auf, das über ein Befüllventil an der Pneumatikhauptleitung angeschlossen ist und das ausgebildet ist, bei Vorliegen eines Boostmodus der Druckluftversorgungsanlage, über das Befüllventil die Pneumatikanlage mit Druckluft zu befüllen. Dies ist angesichts der vorliegenden Erfindung besonders vorteilhaft, da durch das Vorliegen des ersten Entlüftungsventils und des zweiten Entlüftungsventils ein besonders schnelles Entlüften möglich ist, so dass ein schnelles erneutes Befüllen der Pneumatikanlage wünschenswert sein kann. Ein schnelles Befüllen nach einem Entlüftungsvorgang kann notwendig sein, um im Falle eines Entlüftens unter ein gewünschtes Luftdruckniveau innerhalb der Pneumatikanlage schnell das gewünschte Luftdruckniveau bereitzustellen. Außerdem kann ein schnelles Befüllen nach einem Entlüftungsvorgang notwendig sein, um eine Fahrtauglichkeit des die Pneumatikanlage aufweisenden Fahrzeugs wiederherzustellen, beispielsweise nach einem Absenken des Fahrzeugs oder einer Fahrzeugseite um einen bequemen Einstieg in das Fahrzeug zu ermöglichen.

In einer Weiterbildung gemäß dem ersten Aspekt der Erfindung weist die Druckluftversorgungsanlagen weiterhin einen zweitstufigen Kompressor auf, der sowohl mit der Druckluftzuführung, als auch mit der Pneumatikhauptleitung verbunden ist und der ausgebildet ist, in einem entsprechenden weiteren Betriebsmodus der Druckluftversorgungsanlage die Pneumatikanlage mit Druckluft zu befüllen. Ein in dieser Weiterbildung ermöglichtes schnelles Befüllen der Pneumatikanlage ermöglicht ein schnelles Korrigieren des Luftdruckniveaus in der Pneumatikanlage nach dem durch die Erfindung realisierbaren besonders schnellen Entlüftungsprozess. In einer Variante dieser Weiterbildung ist der zweistufige Kompressor eine Alternative oder eine Ergänzung des Luftdruckreservoirs zum Befüllen der Pneumatikanlage aus der Weiterbildung aus dem letzten Abschnitt.

Die Steuerung und Regelung berücksichtigt die Regeneration des Trockenmittels unter Angabe einzustellender Regenerationszyklen.

Nachfolgend werden bevorzugte Weiterbildungen des erfindungsgemäßen pneumatischen Systems gemäß dem zweiten Aspekt der Erfindung beschrieben.

In einer bevorzugten Weiterbildung des pneumatischen Systems, umfasst die Luftfederanlage eine Anzahl von Bälgen, wobei jedem Balg ein vorgeordnetes erstes Wege-Ventil zugeordnet ist. Durch das dem jeweiligen Balg zugeordnete erste Wege-Ventil kann jeder Balg einzeln belüftet und entlüftet werden. Insbesondere kann durch die erfindungsgemäße Druckluftversorgungsanlage jeder Balg einzeln sehr schnell entlüftet werden. In dieser Weiterbildung ist durch ein unterschiedliches Entlüften der Pneumatik von verschiedenen Bälgen auch ein einseitiges, insbesondere linkseitiges oder rechtseitiges, Absenken des die Druckluftversorgungsanlage aufweisenden Fahrzeugs möglich. So senkt sich ein Fahrzeug in einer Variante dieser Weiterbildung immer auf derjenigen Seite, auf der eine Tür zum Einsteigen geöffnet wird. Dies kann beispielsweise über ein mit dem pneumatischen System funktional verbundenes Sensorsystem realisiert werden, wobei das Sensorsystem Sensoren aufweist, die ein Sensorsignal senden, wenn eine Tür des Fahrzeugs geöffnet wird.

Nachfolgend werden bevorzugte Weiterbildungen des erfindungsgemäßen Verfahrens zum Betreiben einer Pneumatikanlage gemäß dem dritten Aspekt der Erfindung beschrieben.

In einer Weiterbildung des Verfahrens, erfolgt das Entlüften in einem ersten Betriebsmodus nur über das erste Entlüftungsventil, so dass die Pneumatikanlage ausschließlich über die Entlüftungsdrossel entlüftet wird.

Das Entlüften erfolgt in einer weiteren Weiterbildung des Verfahrens in einem zweiten Betriebsmodus über das erste Entlüftungsventil und das zweite Entlüftungsventil gleichzeitig.

In einer Weiterbildung des Verfahrens erfolgt das Entlüften in einem dritten Betriebsmodus nur über das zweite Entlüftungsventil.

In einer weiteren Weiterbildung besteht ein Schritt des Verfahrens in einem Auswählen des Betriebsmodus, wobei im Rahmen einer Entlüftung der Pneumatikanlage zwischen dem ersten Betriebsmodus, dem zweiten Betriebsmodus und dem dritten Betriebsmodus ausgewählt werden kann, oder zwischen dem ersten und dem zweiten Betriebsmodus ausgewählt werden kann, oder zwischen dem ersten und dem dritten Betriebsmodus ausgewählt werden kann.

In einer bevorzugten Weiterbildung erfolgt das Entlüften in dem zweiten und/oder einem anderen Betriebsmodus so, dass das erste Entlüftungsventil zu einem Zeitpunkt t1 geöffnet wird und dass das zweite Entlüftungsventil zu einem Zeitpunkt t2 geöffnet wird, und dass der Zeitpunkt t1 in der Zeit vor dem Zeitpunkt t2 liegt.

In einer Weiterbildung des Verfahrens, besteht ein erster Schritt in einem Bereitstellen einer ersten Entlüftungsleitung mit dem ersten Entlüftungsventil und einer zweiten Entlüftungsleitung mit dem zweiten Entlüftungsventil, wobei die zweite Entlüftungsleitung einen größeren minimalen Strömungsquerschnitt eines durchströmenden Druckluftstroms erlaubt als die erste Entlüftungsleitung. Diese und andere bevorzugte Weiterbildungen und Ausführungsformen der Erfindung sind Gegenstand der Unteransprüche und Zeichnungen und präzisieren sowohl die Druckluftversorgungsanlage als auch das Verfahren hinsichtlich besonders vorteilhafter Ausbildungen, vorzugsweise in Bezug auf eine Luftfederanlage eines Fahrzeugs.

Identische oder ähnliche Teile oder Teile identischer oder ähnlicher Funktion sind, dort wo sinnvoll, der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsformen sowie anhand der folgenden Zeichnung. Im Einzelnen zeigt die Zeichnung in:
- FIG. 1: eine erste Ausführungsform einer Druckluftversorgungsanlage gemäß einem ersten Aspekt der Erfindung, mit einem zweistufigen Kompressor, einem 4/2-Wege-Rückschlagventil als erstem Entlüftungsventil und einem 2/2-Wege-Rückschlagventil als zweitem Entlüftungsventil;

- FIG. 2: eine Ausführungsform eines pneumatischen Systems gemäß einem zweiten Aspekt der Erfindung, mit einer Druckluftanlage gemäß der ersten Ausführungsform und einer Pneumatikanlage mit einem Druckluftreservoir und vorgeordnetem Wegeventil an jedem Balg;
- FIG. 3: eine Ausführungsform einer Einrichtung gemäß einem vierten Aspekt der Erfindung, die ausgebildet ist, eine Ausführungsform eines Verfahrens zum Betreiben einer Pneumatikanlage, insbesondere einer Luftfedernlage eines Fahrzeugs, gemäß einem dritten Aspekt der Erfindung zu steuern und/oder zu regeln.

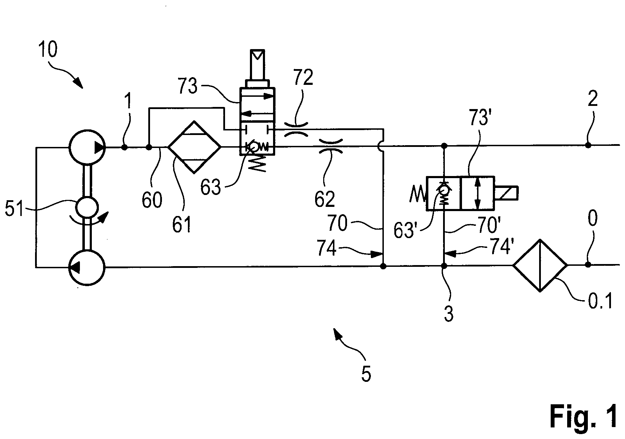

FIG. 1 zeigt eine erste Ausführungsform einer Druckluftversorgungsanlage 10 gemäß einem ersten Aspekt der Erfindung, mit einem zweistufigen Kompressor 51, einem 4/2-Wege-Rückschlagventil als erstem Entlüftungsventil 73 und einem 2/2-Wege-Rückschlagventil als zweitem Entlüftungsventil 73'.

Die Druckluftversorgungsanlage 10 ist in der ersten Ausführungsform ausgebildet, zum Betreiben einer Pneumatikanlage, insbesondere einer Luftfederanlage eines Fahrzeugs, genutzt zu werden. Dafür weist sie eine Druckluftzuführung 1, einen Druckluftanschluss 2 zur in FIG. 1 nicht dargestellten Pneumatikanlage, einen Entlüftungsanschluss 3 zur Umgebung 5 und eine Pneumatikhauptleitung 60 auf. Die Pneumatikhauptleitung 60 ist hierzu zwischen der Druckluftzuführung 1 und dem Druckluftanschluss 2 angeordnet und weist einen Lufttrockner 61, eine Regenerationsdrossel 62 und ein in dieser Ausführungsform optional enthaltenes Rückschlagventil 63 auf. Zwischen der Pneumatikhauptleitung 60 und dem Entlüftungsanschluss 3 ist eine erste Entlüftungsleitung 70 ausgebildet, die ein Entlüftungsdrossel 72 und das erste Entlüftungsventil 73 aufweist. Das erste Entlüftungsventil 73 ist in dieser Ausführungsform als pneumatisches Ventil ausgebildet. Weiterhin ist zwischen dem Druckluftanschluss 2 und dem Entlüftungsanschluss 3 eine zweite Entlüftungsleitung 70' angeordnet, die ein zusätzliches zweites Entlüftungsventil 73' aufweist, welches als 2/2-Wege-Ventil ausgebildet ist. Eine in FIG. 1 nicht dargestellte Ansteuerung des zweiten Entlüftungsventils 73' ist so bereitgestellt, dass dieses Ventil 73' in mindestens einem Betriebsmodus der Druckversorgungsanlage 10 über einen vorbestimmten, bevorzugt über einen gesamten Zeitraum eines Entlüftungsvorgangs geöffnet ist. In dieser Ausführungsform ist das zweite Entlüftungsventil 73' als elektrisches Ventil ausgebildet. In anderen nicht dargestellten Ausführungsformen liegt es als pneumatisches Ventil vor.

Eine Belüftung durch die Druckluftversorgungsanlage 10 wird durch einen als zweistufigen Kompressor 51 ausgebildeten Luftverdichter im Vergleich zur Nutzung eines einfachen Kompressors beschleunigt. Der zweistufige Kompressor 51 ist dafür sowohl mit der Druckluftzuführung 1 als auch mit der Pneumatikhauptleitung 60 verbunden. Dadurch kann er bei Vorliegen eines entsprechenden Betriebsmodus die mit der Druckluftversorgungsanlage 10 verbundene Pneumatikanlage besonders effektiv mit Druckluft befüllen.

Dadurch das der Entlüftungsanschluss 3 zur Entlüftung der ersten Entlüftungsleitung 70 und der zweiten Entlüftungsleitung 70' verwendet wird und außerdem auch mit eine Luftzuführung 0 zum Befüllen der Pneumatikanlage mit Druckluft verbunden ist, kommt die Druckluftversorgungsanlage 10 dieser ersten Ausführungsform mit besonders wenigen Bauteilen aus und es braucht nur ein Luftfilter 0.1 verwendet werden, der direkt an dem Entlüftungsanschluss 3 angebracht ist.

Das erste Entlüftungsventil 73 ist ein 4/2-Wege-Ventil und lässt in einer ersten Stellung die erste Entlüftungsleitung 70 geschlossen und bildet in der Pneumatikhauptleitung 60 das Rückschlagventil 63. Dieses Rückschlagventil 63 öffnet sich entsprechend einer Federkraft innerhalb des Rückschlagventils 63 bei einem geeignet großen Befüllungsdruck durch den zweistufigen Kompressor 51 und ermöglicht dadurch ein Befüllen der an die Druckluftversorgungsanlage 10 angeschlossenen Pneumatikanlage. In einer zweiten Stellung des ersten Entlüftungsventils 73 ist die erste Entlüftungsleitung 70 für einen Luftstrom in Richtung des Entlüftungsanschlusses 3, also bei einer Entlüftung, geöffnet, und das Rückschlagventil 63 in der Pneumatikhauptleitung 60 ist durch ein Ventil ersetzt, welches einen Luftstrom in Richtung des Lufttrockner 61 erlaubt, was ebenfalls für eine Entlüftung der Fall ist.

Eine Ansteuerung des ersten Entlüftungsventils 73 zum Einstellen der Stellung kann durch ein elektromagnetisches Signal erfolgen, das von einer nicht dargestellten Steuerung der Druckluftversorgungsanlage 10 gesendet wird.

In der Pneumatikhauptleitung 60 befindet sich die Regenerationsdrossel 62 in einem Entlüftungsweg der Druckluft für eine Entlüftung durch die erste Entlüftungsleitung 70, wobei die Regenerationsdrossel 62 eine Nennweite zwischen 0,5 mm und 4 mm, bevorzugt 1,5 mm, aufweist. In dem ersten Entlüftungskanal-70 befindet sich die Entlüftungsdrossel 72, die eine Nennweite zwischen 2,6 mm und 8 mm, bevorzugt von 3,6 mm, aufweist, so dass die Regenerationsdrossel 62 eine Begrenzung des Entlüftungsstroms durch die erste Entlüftungsleitung 70 durch einen minimalen Strömungsquerschnitt 74 für einen Luftstrom durch die erste Entlüftungsleitung 70 bewirkt.

Das zusätzliche zweite Entlüftungsventil 73' in der zweiten Entlüftungsleitung 70' ist ein 2/2-Wege-Ventil, das in einer ersten Stellung als ein Rückschlagventil 63' ausgebildet Abhängig von einer Federkraft einer das Rückschlagventil 63' schließenden Feder, kann ein Entlüftungsdruck ausreichender Größe zu einem Öffnen des Rückschlagventils führen. Dadurch wird bei Vorliegen eines zu hohen Drucks in der Druckluftversorgungseinheit 10 automatisch Druckluft zum Entlüftungsanschluss 3 geführt, ohne dass dafür eine Ansteuerung von Ventilen 73, 73' benötigt wird. In einer zweiten Stellung des zweiten Entlüftungsventils 73' ist die zweite Entlüftungsleitung 70' für Luftströme in Entlüftungsrichtung geöffnet. Dabei hat das zweite Entlüftungsventil 73' in der zweiten Stellung z.B. eine Nennweite 74' zwischen 1 mm und 4 mm, bevorzugt 2mm. Folglich kann das zweite Entlüftungsventil 73' für eine Entlüftung der mit der Druckluftversorgungsanlage 10 über den Druckluftanschluss 2 verbundenen Pneumatikanlage verwendet werden.

Eine Ansteuerung des zweiten Entlüftungsventils 73' zum Einstellen einer Schaltstellung erfolgt durch ein elektromagnetisches Signal, was von einer nicht dargestellten Steuerung der Druckluftversorgungsanlage 10 gesendet wird.

Ein Vergleich der oben angegebenen Nennweiten 74, 74' zeigt, dass in der Druckluftversorgungsanlage 10 eine Entlüftung der Pneumatikanlage durch die erste Entlüftungsleitung 70 deutlich langsamer erfolgt als durch die zweite Entlüftungsleitung 70'. Folglich kann abhängig von einem gewünschten Betriebsmodus eine sehr schnelle Entlüftung der Pneumatikanlage über die zweite Entlüftungsleitung 70' erfolgen, oder eine langsamere und somit kontrolliertere Entlüftung über die erste Entlüftungsleitung 70. Alternativ kann eine Entlüftung auch über beide Entlüftungsleitungen 70, 70' erfolgen und folglich besonders schnell.

Eine mögliche Nutzung der ersten Ausführungsform der Druckluftversorgungsanlage 10 ist derart gestaltet, dass die langsamere Entlüftung über die erste Entlüftungsleitung 70 bei laufender Fahrt eines mit der Pneumatikanlage ausgestatteten Fahrzeugs erfolgt. Wohingegen die schnellere Entlüftung über die zweite Entlüftungsleitung 70' ein schnelleres Absenken eines mit der Pneumatikanlage ausgestatteten stehenden Fahrzeugs bewirkt, um beispielsweise ein komfortableres Einsteigen in das Fahrzeug zu ermöglichen.

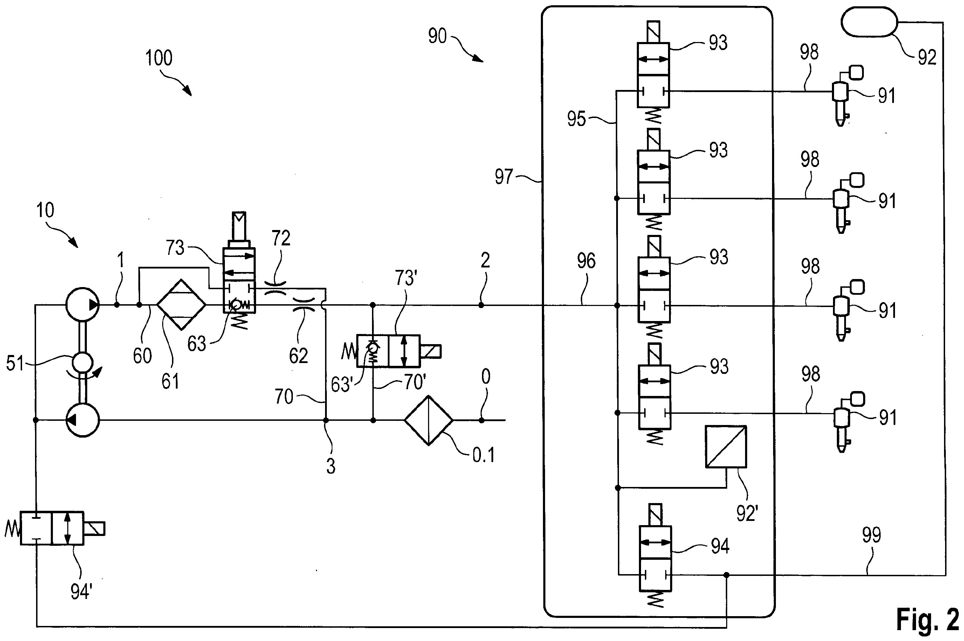

FIG. 2 zeigt eine Ausführungsform eines pneumatischen Systems 100 gemäß einem zweiten Aspekt der Erfindung, mit einer Druckluftanlage 10 gemäß der ersten Ausführungsform und einer Pneumatikanlage 90 mit einem Druckluftreservoir 92 und vorgeordnetem Wegeventil 93 an jedem Balg 91.

Die Druckluftversorgungsanlage 10 ist genauso ausgebildet wie in der in FIG. 1 gezeigten ersten Ausführungsform. Zusätzlich ist die an den Druckluftanschluss 2 angeschlossene Pneumatikanlage 90 schematisch dargestellt. Die Pneumatikanlage 90 ist in Form einer Luftfederanlage ausgebildet.

Die Luftfederanlage weist in diesem Fall eine Anzahl von vier sogenannten Bälgen 91 auf, die jeweils einem Rad des nicht näher dargestellten Fahrzeugs zugeordnet sind und eine Luftfeder des Fahrzeugs bilden. Des Weiteren weist die Luftfederanlage ein Druckluftreservoir 92 zur Speicherung schnell verfügbarer Druckluft für die Bälge 91 auf. Den Bälgen 91 ist jeweils in einer als Feder-Zweigleitung ausgebildeten ersten Zweigleitung 98 ein als Magnetventil ausgebildetes erstes Wege-Ventil 93 vorgeordnet, welches jeweils als Niveauregelventil zum Öffnen oder Schließen einer mit einem Balg 91 gebildeten Luftfeder dient. Die Magnetventile 93 in den Feder-Zweigleitungen 98 sind als 2/2-WegeVentile ausgebildet. Dem Druckluftreservoir 92 ist in einer als Reservoir-Zweigleitung ausgebildeten zweiten Zweigleitung 99 ein als Magnetventil ausgebildetes zweites Wege-Ventil 94 in Form eines weiteren 2/2-Wege-Ventils als Reservoirventil vorgeordnet. Die Magnetventile 93, 94 sind an eine gemeinsame Sammelleitung, eine Galerie 95 bildende Pneumatikleitung, angeschlossen. Die Galerie 95 ist über eine weitere Pneumatikleitung 96 zur Bildung einer pneumatischen Verbindung mit einem Druckluftanschluss 2 der Druckluftversorgungsanlage 10 pneumatisch verbunden. Vorliegend sind die Magnetventile 93, 94 in einem Ventilblock 97 mit fünf Ventilen angeordnet. Die Magnetventile 93, 94 sind in FIG. 2 in einem stromlosen Zustand gezeigt - dabei sind die Magnetventile 93, 94 als stromlos geschlossene Magnetventile gebildet. Weiterhin ist in der Pneumatikanlage 90 ein Spannung/Druck-Sensor 92' bereitgestellt, welcher einen Druck in der Galerie 95 der Pneumatikanlage 90 messen kann. Der Druck wird an eine in FIG. 2 nicht dargestellte Steuerung des pneumatischen Systems gesendet, welche die Ventile 73, 73', 93, 94 des pneumatischen Systems unter anderem abhängig von dem gemessenen Druck steuert oder steuern kann.

Andere, hier nicht gezeigte Ausführungsformen können eine anderen Anordnung der Magnetventile 93, 94 realisieren - es können auch weniger Magnetventile im Rahmen des Ventilblocks genutzt werden.

Zusätzlich zu dem als Magnetventil ausgebildeten Reservoirventil 94, wird das Druckluftreservoir 92 auch über ein Befüllventil 94' mit der Pneumatikhauptleitung 60 der Druckluftversorgungsanlage verbunden. Eine dadurch ermöglichte Strömung von Druckluft aus dem Druckluftreservoir 92 kann zusätzlich von dem zweistufigen Kompressor 51 verdichtet werden, bevor sie über die Druckluftzuführung 1 in die Pneumatikhauptleitung 60 gelangt, was ein besonders effektives und schnelles Befüllen der Pneumatikanlage 90 mit Druckluft zur Folge hat. Es kann somit in der dargestellten Ausführungsform des pneumatischen Systems zwischen einem Befüllen der Pneumatikanlage über das Reservoirventil 94 und einem Befüllen über das Befüllventil 94' gewählt werden.

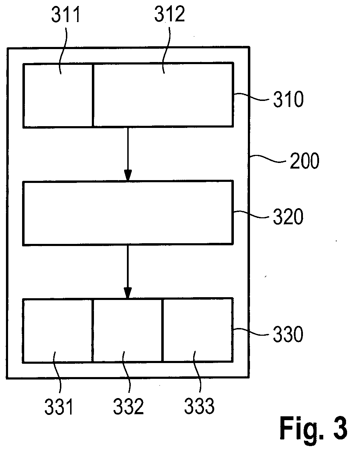

FIG. 3 zeigt eine Ausführungsform einer Einrichtung (200) gemäß einem vierten Aspekt der Erfindung. Die Einrichtung (200) ist ausgebildet eine Ausführungsform eines Verfahrens zum Betreiben einer Pneumatikanlage, insbesondere einer Luftfedernlage eines Fahrzeugs, gemäß einem dritten Aspekt der Erfindung zu steuern und/oder zu regeln. Das Verfahren umfasst die im Folgenden angegebenen Schritte.

In einem ersten Schritt 310 des Verfahrens wird die Pneumatikanlage mittels einer über eine Pneumatikhauptleitung geführte Druckluftströmung aus der Druckluftversorgungsanlage befüllt. Hierbei ist die Einrichtung (200) ausgebildet, sowohl einen Boostmodus (311) als auch mindestens einen weiteren Betriebsmodus (312) zum Befüllen der Pneumatikanlage bereitzustellen.

Im nächsten Schritt 320 wird der Druck in der Pneumatikanlage gehalten, wobei die Pneumatikhauptleitung gegen eine Druckluftströmung aus der Pneumatikanlage gesperrt wird.

Ein finaler Schritt 330 des Verfahrens umfasst ein Entlüften der Pneumatikanlage mittels der über die Pneumatikhauptleitung geführten Druckluftströmung aus der Pneumatikanlage über ein erstes, mit einer Entlüftungsdrossel verbundenes, Entlüftungsventil und/oder über ein zusätzliches zweites Entlüftungsventil, wobei in mindestens einem Betriebsmodus (331, 332, 333) der Druckluftversorgungsanlage das zweite Entlüftungsventil über einen vorbestimmten Zeitraum eines Entlüftungsvorgang geöffnet ist. Die Einrichtung (200) ist ausgebildet, hierfür einen ersten (331), einen zweiten (332) und einen dritten Betriebsmodus (333) bereitzustellen.

### Bezugszeichenliste:

- 0.1: Luftfilter
- 0: Luftzuführung
- 1: Druckluftzuführung
- 2: Druckluftanschluss
- 3: Entlüftungsanschluss
- 5: Umgebung
- 10: Druckluftversorgungsanlage
- 51: zweistufiger Kompressor
- 60: Pneumatikhauptleitung
- 61: Lufttrockner
- 62: Regenerationsdrossel
- 63: Rückschlagventil
- 63': Rückschlagventil der zweiten Entlüftungsleitung
- 70: erste Entlüftungsleitung
- 70': zweite Entlüftungsleitung
- 72: Entlüftungsdrossel
- 73: erstes Entlüftungsventil
- 73': zweites Entlüftungsventil
- 74: Strömungsquerschnitt der ersten Entlüftungsleitung
- 74': Strömungsquerschnitt der zweiten Entlüftungsleitung
- 90: Pneumatikanlage
- 91: Balg
- 92: Druckluftreservoir
- 92': Spannung/Druck-Sensor
- 93: erstes Wege-Ventil
- 94: zweites Wege-Ventil, Reservoirventil
- 94': Befüllventil
- 95: Galerie
- 96: weitere Pneumatikleitung
- 97: Ventilblock
- 98: erste Zweigleitung, Feder-Zweigleitung
- 99: zweite Zweigleitung, Reservoir-Zweigleitung
- 100: Pneumatisches System
- 200: Einrichtung
- 310: erster Schritt des Verfahrens
- 311: Boostmodus
- 312: Befüll-Betriebsmodus
- 320: nächster Schritt des Verfahrens
- 330: finaler Schritt des Verfahrens
- 331: erster Betriebsmodus
- 332: zweiter Betriebsmodus
- 333: dritter Betriebsmodus

## Patentansprüche

1. Druckluftversorgungsanlage (10) zum Betreiben einer Pneumatikanlage (90), insbesondere einer Luftfederanlage eines Fahrzeugs, aufweisend:
- eine Druckluftzuführung (1),
- einen Druckluftanschluss (2) zur Pneumatikanlage (90),
- mindestens einen Entlüftungsanschluss (3) zur Umgebung (5),
- eine Pneumatikhauptleitung (60) zwischen der Druckluftzuführung (1) und dem Druckluftanschluss (2), die einen Lufttrockner (61) und eine Regenerationsdrossel (62), aufweist,
- eine erste Entlüftungsleitung (70) zwischen der Pneumatikhauptleitung (60) und einem Entlüftungsanschluss (3), die ein erstes, pneumatisches 4/2-Wege-Entlüftungsventil (73), das in einer ersten Stellung die erste Entlüftungsleitung (70) geschlossen lässt und in der Pneumatikhauptleitung (60) ein Rückschlagventil (63) bildet, und eine Entlüftungsdrossel (72) aufweist,
- eine zweite Entlüftungsleitung (70') zwischen dem Druckluftanschluss (2) und einem Entlüftungsanschluss (3), die ein zusätzliches zweites Entlüftungsventil (73') aufweist, welches ein 2/2-Wege-Ventil ist und das in einer ersten Stellung als ein Rückschlagventil (63') ausgebildet ist, und
die zweite Entlüftungsleitung (70') einen größeren minimalen Strömungsquerschnitt (74') eines durchströmenden Druckluftstroms erlaubt als die erste Entlüftungsleitung (70),
wobei die Druckluftversorgungsanlage (10) ausgebildet ist, mindestens einen Betriebsmodus (332, 333) bereitzustellen, in dem das zweite Entlüftungsventil (73') über einen vorbestimmten Zeitraum eines Entlüftungsvorgangs geöffnet ist.

2. Druckluftversorgungsanlage gemäß Anspruch 1, bei der der vorbestimmte Zeitraum der gesamte Zeitraum des Entlüftungsvorgangs ist.

3. Druckluftversorgungsanlage gemäß einem der vorhergehenden Ansprüche, bei der die erste Entlüftungsleitung (70) und die zweite Entlüftungsleitung (70') mit demselben Entlüftungsanschluss (3) verbunden sind.

4. Druckluftversorgungsanlage gemäß einem der vorhergehenden Ansprüche, die ausgebildet ist, einen zweiten Betriebsmodus (332) bereitzustellen, in dem das erste Entlüftungsventil (73) und das zweite Entlüftungsventil (73') zumindest zeitweise gleichzeitig geöffnet sind, so dass die Pneumatikanlage (90) über den vorbestimmten Zeitraum eines Entlüftungsvorgangs über die erste Entlüftungsleitung (70) und die zweite Entlüftungsleitung (70') entlüftet werden kann.

5. Druckluftversorgungsanlage gemäß einem der vorhergehenden Ansprüche, die ausgebildet ist, einen dritten Betriebsmodus bereitzustellen, in dem nur das zweite Entlüftungsventil (73') geöffnet ist, so dass die Pneumatikanlage (90) ausschließlich über den gesamten Zeitraum eines Entlüftungsvorgangs über die zweite Entlüftungsleitung (70') entlüftet werden kann.

6. Druckluftversorgungsanlage gemäß einem der vorhergehenden Ansprüche, bei der der zweite und/oder ein anderer Betriebsmodus (332, 333) so bereitgestellt ist, dass das erste Entlüftungsventil (73) zu einem Zeitpunkt t1 geöffnet wird und dass das zweite Entlüftungsventil (73') zu einem Zeitpunkt t2 geöffnet wird, und dass der Zeitpunkt t1 zeitlich vor dem Zeitpunkt t2 liegt.

7. Druckluftversorgungsanlage gemäß einem der vorhergehenden Ansprüche, die weiterhin ein Druckluftreservoir (92) aufweist, insbesondere zusätzlich oder alternativ als Teil einer Pneumatikanlage (90), das über ein Befüllventil (94') an der Pneumatikhauptleitung (60) angeschlossen ist und das ausgebildet ist, bei Vorliegen eines Boostmodus (311) der Druckluftversorgungsanlage (10), über das Befüllventil (94') und die Pneumatikhauptleitung (60) die Pneumatikanlage (90) mit Druckluft zu befüllen.

8. Druckluftversorgungsanlage gemäß einem der vorhergehenden Ansprüche, die weiterhin einen zweistufigen Kompressor (51) aufweist, der sowohl mit der Luftzuführung (0), als auch mit der Pneumatikhauptleitung (60) verbunden ist und der ausgebildet ist, in einem entsprechenden Befüll-Betriebsmodus (312) der Druckluftversorgungsanlage (10) die Pneumatikanlage (90) mit Druckluft zu befüllen.

9. Pneumatisches System (100) mit der Druckluftversorgungsanlage (10) nach einem der Ansprüche 1 bis 8 und einer Pneumatikanlage (90), die in Form einer Luftfederanlage gebildet ist, die eine Galerie (95) und wenigstens eine an der Galerie (95) pneumatisch angeschlossene erste Zweigleitung (98) mit einem Balg (91) und/oder eine an der Galerie (95) pneumatisch angeschlossene zweite Zweigleitung (99) mit einem Druckluftreservoir (92), sowie einem dem Balg (91) vorgeordneten ersten Wege-Ventil (93) und/oder dem Druckluftreservoir (92) vorgeordneten zweiten Wege-Ventil (94) aufweist.

10. Verfahren zum Betreiben einer Pneumatikanlage, insbesondere einer Luftfederanlage eines Fahrzeugs, mittels der Druckluftversorgungsanlage nach einem der Ansprüche 1 bis 9, aufweisend die Schritte:
- Befüllen der Pneumatikanlage (90) mittels einer über eine Pneumatikhauptleitung (60) geführte Druckluftströmung aus der Druckluftversorgungsanlage (10);
- Halten des Drucks in der Pneumatikanlage (90), wobei die Pneumatikhauptleitung (60) gegen eine Druckluftströmung aus der Pneumatikanlage (90) gesperrt wird, und
- Entlüften der Pneumatikanlage (90) mittels der über die Pneumatikhauptleitung (60) geführten Druckluftströmung aus der Pneumatikanlage (90) über ein erstes, pneumatisches 4/2-Wege-Entlüftungsventil (73), welches in einer ersten Entlüftungsleitung (70) angeordnet und mit einer Entlüftungsdrossel (72) verbunden ist, und/oder über ein zweites Entlüftungsventil (73') Ventil, das in einer ersten Stellung als ein Rückschlagventil (63') ausgebildet ist und in einer zweiten Entlüftungsleitung (70') angeordnet ist, und
die zweite Entlüftungsleitung (70') einen größeren minimalen Strömungsquerschnitt (74') eines durchströmenden Druckluftstroms erlaubt als die erste Entlüftungsleitung (70),
wobei in mindestens einem Betriebsmodus (332, 333) der Druckluftversorgungsanlage (10) das zweite Entlüftungsventil (73') über einen vorbestimmten Zeitraum eines Entlüftungsvorgangs geöffnet ist.

11. Verfahren gemäß Anspruch 10, bei dem das Entlüften in einem zweiten Betriebsmodus (332) das erste Entlüftungsventil (73) und das zweite Entlüftungsventil (73') gleichzeitig erfolgt, wobei das erste Entlüftungsventil (73) und das zweite Entlüftungsventil (73') gleichzeitig geöffnet sind, so dass die Pneumatikanlage (90) über den vorbestimmten Zeitraum eines Entlüftungsvorgangs über die erste Entlüftungsleitung (70) und die zweite Entlüftungsleitung (70') entlüftet wird.

12. Verfahren gemäß Anspruch 11, bei dem der vorbestimmte Zeitraum ein gesamter Zeitraum des Entlüftungsvorgangs ist.

13. Verfahren gemäß mindestens einem der Ansprüche 10 bis 12, bei dem das Entlüften in einem dritten Betriebsmodus (333) in dem nur das zweite Entlüftungsventil (73') geöffnet ist so erfolgt, dass die Pneumatikanlage (90) ausschließlich über den gesamten Zeitraum eines Entlüftungsvorgangs über die zweite Entlüftungsleitung (70') entlüftet wird.

14. Verfahren gemäß einem der Ansprüche 10 bis 13, bei dem das Entlüften in dem zweiten und/oder einem anderen Betriebsmodus (331, 332, 333) so erfolgt, dass das erste Entlüftungsventil (73) zu einem Zeitpunkt t1 geöffnet wird und dass das zweite Entlüftungsventil (73') zu einem Zeitpunkt t2 geöffnet wird, und dass der Zeitpunkt t1 in der Zeit vor dem Zeitpunkt t2 liegt.

15. Einrichtung (200) zum Steuern und/oder Regeln einer Druckluftversorgungsanlage 10, umfassend Mittel zur Ausführung des Verfahrens nach einem der Ansprüche 10 bis 14.

## Claims

1. A compressed air supply installation (10) for operating a pneumatic installation (90), in particular an air spring installation of a vehicle, comprising:
- a compressed air feed (1),
- a compressed air connection point (2) to the pneumatic installation (90),
- at least one venting connection point (3) to the environment (5),
- a pneumatic main line (60) between the compressed air feed (1) and the compressed air connection point (2), which comprises an air dryer (61) and a regeneration throttle (62),
- a first ventilation line (70) between the pneumatic main line (60) and a ventilation connection (3), which has a first pneumatic 4/2-way ventilation valve (73), which in a first position closes the first ventilation line (70) and which forms a check valve (63) in the pneumatic main line (60), and has a ventilation throttle (72),
- a second ventilation line (70') between the compressed air connection (2) and a ventilation connection (3), which has an additional second ventilation valve (73'), which is a 2/2-way valve and which is configured in a first position as a check valve (63'), and
- the second ventilation line (70') permits a larger minimum flow cross-section (74') of a throughflowing compressed air flow than the first ventilation line (70),
wherein the compressed air supply installation (10) is configured to provide at least one operating mode (332, 333) in which the second ventilation valve (73') is open over a predetermined time period of a ventilation process.

2. The compressed air supply installation according to claim 1, in which the predetermined time period is the entire time period of the ventilation process.

3. The compressed air supply installation according to any of the foregoing claims, in which the first ventilation line (70) and the second ventilation line (70') are connected to the same ventilation connection (3).

4. The compressed air supply installation according to any of the foregoing claims, which is configured to provide a second operating mode (332), in which the first ventilation valve (73) and the second ventilation valve (73') are at least temporarily simultaneously open, so that the pneumatic installation (90) can be ventilated over the predetermined time period of a ventilation process via the first ventilation line (70) and the second ventilation line (70').

5. The compressed air supply installation according to any of the foregoing claims, which is configured to provide a third operating mode, in which only the second ventilation valve (73') is open, so that the pneumatic installation (90) can be exclusively ventilated over the entire time period of a ventilation process via the second ventilation line (70').

6. The compressed air supply installation according to any of the foregoing claims, in which the second and/or another operating mode (332, 333) is provided such that the first ventilation valve (73) is opened at a time t1 and that the second ventilation valve (73') is opened at a time t2, and that the time t1 precedes the time t2.

7. The compressed air supply installation according to any of the foregoing claims, which further comprises a compressed air reservoir (92), in particular additionally or alternatively as part of a pneumatic installation (90), which is connected to the pneumatic main line (60) via a filling valve (94') and that is configured to, in the presence of a boost mode (311) of the compressed air supply installation (10), fill the pneumatic installation (90) with compressed air via the filling valve (94') and the pneumatic main line (60).

8. The compressed air supply installation according to any of the foregoing claims, which further comprises a two-stage compressor (51) connected both to the air supply (0) and to the pneumatic main line (60) and configured to, in a corresponding filling operating mode (312) of the compressed air supply installation (10), fill the pneumatic installation (90) with compressed air.

9. A pneumatic system (100) with the compressed air supply installation (10) according to any of claims 1 to 8 and a pneumatic installation (90) formed as an air suspension installation, which has a gallery (95) and at least one first branch line (98) with a bellows (91) pneumatically connected to the gallery (95), and/or a second branch line (99) with a compressed air reservoir (92) pneumatically connected to the gallery (95), as well as a first way valve (93) connected upstream of the bellows (91) and/or a second way valve (94) connected upstream of the compressed air reservoir (92).

10. A method for operating a pneumatic installation, in particular an air spring installation of a vehicle, by means of the compressed air supply installation according to any of claims 1 to 9, comprising the steps:
- filling the pneumatic installation (90) via a compressed air flow conducted via a pneumatic main line (60) from the compressed air supply installation (10);
- maintaining the pressure in the pneumatic installation (90), wherein the pneumatic main line (60) is shut off for prevention of a compressed air flow out of the pneumatic installation (90), and
- ventilating the pneumatic installation (90) by means of a compressed air flow conducted via the pneumatic main line (60) out of the pneumatic installation (90) via a first pneumatic 4/2 way ventilation valve (73) arranged in a first ventilation line (70) and is connected to a ventilation throttle (72), and/or via a second ventilation valve valve (73'), which in a first position is configured as a check valve (63') and is arranged in a second ventilation line (70'), and
the second ventilation line (70') permitting a larger minimum flow cross-section (74') of a throughflowing compressed air flow than the first ventilation line (70),
wherein in at least one operating mode (332, 333) of the compressed air supply installation (10) the second ventilation valve (73') is open over a predetermined time period of a ventilation process.

11. The method according to claim 10, in which the ventilation in a second operating mode (332) via the first ventilation valve (73) and the second ventilation valve (73') occurs simultaneously, wherein the first ventilation valve (73) and the second ventilation valve (73') are simultaneously opened, so that the pneumatic installation (90) over the predetermined time period of a ventilation process is ventilated via the first ventilation line (70) and the second ventilation line (70').

12. The method according to claim 11, in which the predetermined time period is an entire time period of the ventilation process.

13. The method according to at least one of claims 10 to 12, in which the ventilation occurs in a third operating mode (333) in which only the second ventilation valve (73') is opened such that the pneumatic installation (90) is ventilated exclusively via the second ventilation line (70') over the entire time period of a ventilation process.

14. The method according to any of claims 10 to 13, in which the ventilation in the second and/or another operating mode (331, 332, 333) occurs such that the first ventilation valve (73) is opened at a time t1 and that the second ventilation valve (73') is opened at a time t2, and that the time t1 precedes the time t2.

15. A device (200) for controlling and/or regulating a compressed air supply installation (10), comprising means for carrying out the method according to any of claims 10 to 14.

## Revendications

1. Installation d'alimentation en air comprimé (10) destinée à faire fonctionner une installation pneumatique (90), en particulier une installation de suspension pneumatique d'un véhicule, qui présente :
- une amenée d'air comprimé (1),
- un raccord d'air comprimé (2) vers l'installation pneumatique (90),
- au moins un raccord de purge (3) vers l'environnement (5),
- une conduite principale pneumatique (60) entre l'amenée d'air comprimé (1) et le raccord d'air comprimé (2), qui présente un dessiccateur d'air (61) et un étranglement de régénération (62),
- une première conduite de purge (70) entre la conduite principale pneumatique (60) et un raccord de purge (3), qui présente une première valve de purge à 4/2 voies (73) pneumatique, qui dans un premier positionnement laisse la première conduite de purge (70) fermée et forme un clapet de non-retour (63) dans la conduite principale pneumatique (60), et un étranglement de purge (72),
- une seconde conduite de purge (70') entre le raccord d'air comprimé (2) et un raccord de purge (3), qui présente une seconde valve de purge (73') complémentaire, laquelle est un distributeur à 2/2 voies et qui dans un premier positionnement est conçue en tant que clapet de non-retour (63'), et
la seconde conduite de purge (70') autorise une section transversale d'écoulement (74') minimale d'un flux d'air comprimé traversant plus grande que la première conduite de purge (70),
dans lequel l'installation d'alimentation en air comprimé (10) est conçue pour mettre à disposition au moins un mode de fonctionnement (332, 333) dans lequel la seconde valve de purge (73') est ouverte pendant une durée prédéterminée d'un processus de purge.

2. Installation d'alimentation en air comprimé selon la revendication 1, dans laquelle la durée prédéterminée est la durée totale du processus de purge.

3. Installation d'alimentation en air comprimé selon l'une des revendications précédentes, dans laquelle la première conduite de purge (70) et la seconde conduite de purge (70') sont reliées au même raccord de purge (3).

4. Installation d'alimentation en air comprimé selon l'une des revendications précédentes, qui est conçue pour mettre à disposition un deuxième mode de fonctionnement (332) dans lequel la première valve de purge (73) et la seconde valve de purge (73') sont simultanément ouvertes au moins temporairement, de sorte que l'installation pneumatique (90) puisse être purgée pendant la durée prédéterminée d'un processus de purge via la première conduite de purge (70) et la seconde conduite de purge (70').

5. Installation d'alimentation en air comprimé selon l'une des revendications précédentes, qui est conçue pour mettre à disposition un troisième mode de fonctionnement dans lequel seule la seconde valve de purge (73') est ouverte, de sorte que l'installation pneumatique (90) puisse être purgée exclusivement pendant la durée totale d'un processus de purge via la seconde conduite de purge (70').

6. Installation d'alimentation en air comprimé selon l'une des revendications précédentes, dans laquelle le deuxième et/ou un autre mode de fonctionnement (332, 333) est mis à disposition de telle sorte que la première valve de purge (73) soit ouverte à un instant t1 et que la seconde valve de purge (73') soit ouverte à un instant t2, et que l'instant t1 précède l'instant t2 dans le temps.

7. Installation d'alimentation en air comprimé selon l'une des revendications précédentes, qui présente en outre un réservoir d'air comprimé (92), en particulier en complément ou alternativement en tant que partie d'une installation pneumatique (90), qui est raccordé à la conduite principale pneumatique (60) via une vanne de remplissage (94') et qui est conçu pour, en présence d'un mode accéléré (311) de l'installation d'alimentation en air comprimé (10), remplir l'installation pneumatique (90) avec de l'air comprimé via la vanne de remplissage (94') et la conduite principale pneumatique (60).

8. Installation d'alimentation en air comprimé selon l'une des revendications précédentes, qui présente en outre un compresseur (51) à deux étages qui est relié à la fois à l'amenée d'air (0) et à la conduite principale pneumatique (60) et qui est conçu pour, dans un mode de fonctionnement de remplissage (312) correspondant de l'installation d'alimentation en air comprimé (10), remplir l'installation pneumatique (90) avec de l'air comprimé.

9. Système pneumatique (100) avec l'installation d'alimentation en air comprimé (10) selon l'une des revendications 1 à 8 et une installation pneumatique (90) qui est conçue sous la forme d'une installation de suspension pneumatique, qui présente une galerie (95) et au moins une première conduite de raccordement (98) raccordée pneumatiquement à la galerie (95) avec un soufflet (91) et/ou une seconde conduite de raccordement (99) raccordée pneumatiquement à la galerie (95) avec un réservoir d'air comprimé (92), ainsi qu'un premier distributeur (93) monté en amont du soufflet (91) et/ou un second distributeur (94) monté en amont du réservoir d'air comprimé (92).

10. Procédé destiné à faire fonctionner une installation pneumatique, en particulier une installation de suspension pneumatique d'un véhicule, au moyen de l'installation d'alimentation en air comprimé selon l'une des revendications 1 à 9, qui présente les étapes consistant à :
- remplir l'installation pneumatique (90) au moyen d'un écoulement d'air comprimé guidé via une conduite principale pneumatique (60) depuis l'installation d'alimentation en air comprimé (10) ;
- maintenir la pression dans l'installation pneumatique (90), dans lequel la conduite principale pneumatique (60) est verrouillée contre un écoulement d'air comprimé depuis l'installation pneumatique (90), et
- purger l'installation pneumatique (90) au moyen de l'écoulement d'air comprimé guidé via la conduite principale pneumatique (60) depuis l'installation pneumatique (90) via une première valve de purge à 4/2 voies (73) pneumatique, laquelle est agencée dans une première conduite de purge (70) et est reliée à un étranglement de purge (72), et/ou via une seconde valve valve de purge (73') qui dans un premier positionnement est conçue en tant que clapet de non-retour (63') et est agencée dans une seconde conduite de purge (70'), et
la seconde conduite de purge (70') autorise une section transversale d'écoulement (74') minimale d'un flux d'air comprimé traversant plus grande que la première conduite de purge (70),
dans lequel dans au moins un mode de fonctionnement (332, 333) de l'installation d'alimentation en air comprimé (10) la seconde valve de purge (73') est ouverte pendant une durée prédéterminée d'un processus de purge.

11. Procédé selon la revendication 10, dans lequel la purge, dans un deuxième mode de fonctionnement (332), s'effectue simultanément par la première valve de purge (73) et la seconde valve de purge (73'), dans lequel la première valve de purge (73) et la seconde valve de purge (73') sont ouvertes simultanément, de sorte que l'installation pneumatique (90) soit purgée pendant la durée prédéterminée d'un processus de purge via la première conduite de purge (70) et la seconde conduite de purge (70').

12. Procédé selon la revendication 11, dans lequel la durée prédéterminée est une durée totale du processus de purge.

13. Procédé selon au moins l'une des revendications 10 à 12, dans lequel la purge, dans un troisième mode de fonctionnement (333) dans lequel seule la seconde valve de purge (73') est ouverte, s'effectue de telle sorte que l'installation pneumatique (90) est purgée exclusivement pendant la durée totale d'un processus de purge via la seconde conduite de purge (70').

14. Procédé selon l'une des revendications 10 à 13, dans lequel la purge, dans le deuxième et/ou un autre mode de fonctionnement (331, 332, 333), s'effectue de telle sorte que la première valve de purge (73) est ouverte à un instant t1 et que la seconde valve de purge (73') est ouverte à un instant t2, et que l'instant t1 précède l'instant t2 dans le temps.

15. Dispositif (200) destiné à commander et/ou régler une installation d'alimentation en air comprimé (10), qui comprend des moyens pour exécuter le procédé selon l'une des revendications 10 à 14.
